# EUROPÄISCHE PATENTSCHRIFT

(11) **EP 2 622 527 B1**
(45) Veröffentlichungstag und Bekanntmachung des Hinweises auf die Patenterteilung: **28.01.2015**
(21) Anmeldenummer: 11805465.9
(22) Anmeldetag: 15.12.2011
(51) Int. Cl.: G06F 21/00

(54) **VERFAHREN UND VORRICHTUNG ZUM BEREITSTELLEN EINES KRYPTOGRAPHISCHEN SCHLÜSSELS FÜR EIN FELDGERÄT**
METHOD AND DEVICE FOR PROVIDING A CRYPTOGRAPHIC KEY FOR A FIELD DEVICE
PROCÉDÉ ET DISPOSITIF POUR FOURNIR UNE CLÉ CRYPTOGRAPHIQUE POUR UN APPAREIL DE TERRAIN

(30) Priorität: 14.01.2011 DE 102011002703
(43) Veröffentlichungstag der Anmeldung: 07.08.2013
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2011/072895
(87) Internationale Veröffentlichungsnummer: WO 2012/095235

(56) Entgegenhaltungen:
- WO-A1-2009/077014
- JAMSHAID K ET AL: "SEKEN: secure and efficient key exchange for sensor networks", PERFORMANCE, COMPUTING, AND COMMUNICATIONS, 2004 IEEE INTERNATIONAL CO NFERENCE ON PHOENIX, AZ APRIL 15-17, 2004, PISCATAWAY, NJ, USA,IEEE, 15. April 2004 (2004-04-15), Seiten 415-422, XP010770096, ISBN: 978-0-7803-8396-8
- LINCHUN LI ET AL: "ACKDs: An Authenticated Combinatorial Key Distribution Scheme for Wireless Sensor Networks", SOFTWARE ENGINEERING, ARTIFICIAL INTELLIGENCE, NETWORKING, AND PARALLEL/DISTRIBUTED COMPUTING, 2007. SNPD 2007. EIGHTH ACIS INTERNATIONAL CONFERENCE ON, IEEE, PISCATAWAY, NJ, USA, 1. Juli 2007 (2007-07-01), Seiten 262-267, XP031124924, ISBN: 978-0-7695-2909-7
- KRAUSZ C ET AL: "On handling insider attacks in wireless sensor networks", INFORMATION SECURITY TECHNICAL REPORT, ELSEVIER ADVANCED TECHNOLOGY, Bd. 13, Nr. 3, 1. August 2008 (2008-08-01) , Seiten 165-172, XP025658707, ISSN: 1363-4127, DOI: 10.1016/J.ISTR.2008.10.011 [gefunden am 2008-11-01]
- WEINGART S H ED - KOC C K ET AL: "PHYSICAL SECURITY DEVICES FOR COMPUTER SUBSYSTEMS: A SURVEY OF ATTACKS AND DEFENSES", CRYPTOGRAPHIC HARDWARE AND EMBEDDED SYSTEMS. 2ND INTERNATIONAL WORKSHOP, CHES 2000, WORCHESTER, MA, AUG. 17 - 18, 2000 PROCEEDINGS; [LECTURE NOTES IN COMPUTER SCIENCE], BERLIN : SPRINGER, DE, Bd. VOL. 1965, 17. August 2000 (2000-08-17), Seiten 302-317, XP001049140, ISBN: 978-3-540-41455-1
- TREYTL A ET AL: "Practical Issues on Key Distribution in Power Line Networks", 10TH IEEE INTERNATIONAL CONFERENCE ON EMERGING TECHOLOGIES AND FACTORY AUTOMATION, IEEE, PISCATAWAY, NJ, USA, Bd. 2, 19. September 2005 (2005-09-19), Seiten 83-90, XP010905471, DOI: 10.1109/ETFA.2005.1612666 ISBN: 978-0-7803-9401-8

## Beschreibung

Der Erfindung betrifft ein Verfahren und eine Vorrichtung zum Bereitstellung eines kryptographischen Schlüssels für ein Feldgerät, insbesondere ein industrielles Feldgerät.

Industrielle Feldgeräte, die Steuerungsfunktionen erfüllen, beispielsweise eine Ventilsteuerung, verfügen in vielen Fällen über Sensoren und Aktoren oder sonstige Subsysteme. Zum Schutz einer Datenkommunikation vor Manipulationen ist es notwendig, auf den Feldgeräten kryptographische Schlüssel bzw. Credentials geschützt zu speichern. Für derartige Feldgeräte, die häufig in Bereichen installiert sind, in denen sie für Angreifer zugänglich sind, ist es notwendig, diese Feldgeräte vor physikalischen Manipulationen zu schützen. Daher werden bei herkömmlichen Feldgeräten sensible Daten, insbesondere kryptographische Schlüssel, bisher in einem Bereich gespeichert, der lokal einen gewissen Manipulationsschutz bietet, beispielsweise in einem besonders geschützten Gehäuse, welches beispielsweise über ein sogenanntes Drahtgeflecht bzw. Wire Mesh bzw. ein Sicherheitsleitgitter verfügt, d. h. eine Drahtnetzsensorik, die bei Manipulation an dem Gehäuse diese Manipulation erfasst und gegebenenfalls ein automatisches Löschen der gespeicherten Daten veranlasst. Derartige Sensoren werden auch als Tamper-Sensoren bezeichnet. Allgemein ist somit eine Tamper-Überwachung durch Tamper-Sensoren bekannt, bei denen die Tamper-Sensoren jedoch in der Regel eine Stromversorgung benötigen. Es sind physikalische Schutzmaßnahmen bekannt, die ein Tampering erschweren, beispielsweise besondere Gehäuse oder vergossene Baugruppen. Eine derartige lokale Tamper-Überwachung benötigt jedoch eine dauerhafte Stromversorgung bzw. eine Pufferbatterie. Falls die durch die Batterie zur Verfügung stehende elektrische Energie zur Neige geht, wird somit die Tamper-Überwachung außer Kraft gesetzt. Weiterhin muss bei dieser herkömmlichen Vorgehensweise jedes Feldgerät mit einer derartigen Tamper-Überwachung bzw. einem derartigen Tamper-Schutz separat versehen werden, so dass der technische Aufwand relativ hoch ist.

Eine solche Vorgehensweise ist z.B. bekannt aus "SEKEN: secure and efficient key exchange for sensor networks", Kamran Jamshaid, Loren Schwiebert, 2004 IEEE INTERNATIONAL CONFERENCE ON PERFORMANCE, COMPUTING, AND COMMUNICATIONS, PHOENIX, AZ APRIL 15-17, 2004, ISBN: 978-0-7803-8396-8.

Es ist daher eine Aufgabe der vorliegenden Erfindung, ein Verfahren und eine Vorrichtung zu schaffen, die einen leistungsstarken Tamper- bzw. Manipulationsschutz für Feldgeräte bietet und gleichzeitig die Nachteile der bisherigen herkömmlichen Tamper-Schutz-Überwachungseinrichtungen vermeidet.

Diese Aufgabe wird erfindungsgemäß durch eine Sicherheitsvorrichtung mit den im Patentanspruch 1 angegebenen Merkmalen gelöst.

Die Erfindung schafft eine Sicherheitsvorrichtung zur Bereitstellung eines kryptographischen Schlüssels für ein Feldgerät,
wobei die Sicherheitsvorrichtung mit mindestens einem dem Feldgerät zugeordneten Tamper-Sensor verbunden ist, welcher bei Erkennung einer an dem Feldgerät vorgenommenen physikalischen Manipulation eine Manipulationsmeldung abgibt,
wobei der kryptographische Schlüssel dem Feldgerät durch die Sicherheitsvorrichtung nur dann bereitgestellt wird, falls die Sicherheitsvorrichtung von den dem Feldgerät zugeordneten Tamper-Sensoren keine Manipulationsmeldung erhält.

Die Sicherheitsvorrichtung ist nicht an dem zu überwachenden Feldgerät angebracht, sondern über ein Netzwerk mit dem Feldgerät verbunden, d.h. die Tamper-Überwachung des Feldgerätes erfolgt nicht lokal, sondern remote durch eine entfernt gelegene Sicherheitsvorrichtung. Eine dauerhafte bzw. permanente Stromversorgung, beispielsweise durch eine Pufferbatterie bei dem Feldgerät, ist daher bei der erfindungsgemäßen Tamper-Überwachung nicht erforderlich. Weiterhin ist der technische Aufwand bei der erfindungsgemäßen Tamper-Überwachung mittels der Sicherheitsvorrichtung gemäß der Erfindung relativ gering, da die jeweiligen Feldgeräte nicht mit einem lokalen Tamper-Schutz versehen werden müssen.

Bei einer möglichen Ausführungsform der erfindungsgemäßen Sicherheitsvorrichtung sind die Tamper-Sensoren drahtlos oder drahtgebunden mit der Sicherheitsvorrichtung verbunden.

Eine drahtlose Verbindung der Tamper-Sensoren mit der Sicherheitsvorrichtung erlaubt eine einfache Installation des Feldgerätes und vermindert damit den technischen Aufwand zur Implementierung.

Bei einer weiteren möglichen Ausführungsform der erfindungsgemäßen Sicherheitsvorrichtung sind die Tamper-Sensoren an dem Feldgerät direkt angebracht oder in dem Feldgerät integriert.

Bei einer weiteren möglichen Ausführungsform der erfindungsgemäßen Sicherheitsvorrichtung sind die Tamper-Sensoren an einem geschlossenen Gehäuse bzw. einem Schaltschrank angebracht, in welchem sich das jeweilige Feldgerät befindet.

Bei einer weiteren möglichen Ausführungsform der erfindungsgemäßen Sicherheitsvorrichtung wird der kryptographische Schlüssel dem jeweiligen Feldgerät bei dessen Anmeldung zu einem Netzwerk nur nach erfolgreicher Authentisierung gegenüber der Sicherheitsvorrichtung bereitgestellt.

Bei einer weiteren möglichen Ausführungsform der erfindungsgemäßen Sicherheitsvorrichtung wird der bereitgestellte kryptographische Schlüssel durch das Feldgerät zur Ver- oder Entschlüsselung von Nachrichten verwendet, die das Feldgerät mit anderen Feldgeräten oder mit einem Gateway-Knoten des Netzwerkes austauscht.

Weiterhin ist es möglich, dass der bereitgestellte kryptographische Schlüssel durch das Feldgerät zur Entschlüsselung von Daten verwendet wird, die in dem Feldgerät lokal gespeichert sind.

Bei einer weiteren möglichen Ausführungsform der erfindungsgemäßen Sicherheitsvorrichtung weist diese eine Leseeinheit auf, welche Meldungen von den Tamper-Sensoren drahtlos empfängt.

Bei einer möglichen Ausführungsform der erfindungsgemäßen Sicherheitsvorrichtung handelt es sich bei den Tamper-Sensoren um aktive Sensoren, die über eine eigene Stromversorgung verfügen.

Bei einer alternativen bevorzugten Ausführungsform handelt es sich bei den Tamper-Sensoren um passive Sensoren, die über keine eigene Stromversorgung verfügen.

Die Tamper-Sensoren dienen zur Erfassung physikalischer Manipulationen, die durch einen Angreifer an dem Feldgerät vorgenommen werden können.

Bei einer möglichen Ausführungsform handelt es sich bei diesen Tamper-Sensoren um elektrische oder magnetische Schalter zum Erkennen einer Öffnung eines Gehäuses bzw. eines Schaltschrankes.

Weiterhin kann es sich bei den Tamper-Sensoren um Sensoren zur Erfassung elektromagnetischer Strahlen handeln.

Bei den Sensoren kann es sich insbesondere um Lichtsensoren bzw. Lichtschrankensensoren handeln.

Bei einer weiteren möglichen Ausführungsform umfassen die Tamper-Sensoren auch Sensoren zur Erfassung von Ionenstrahlen.

Bei einer weiteren möglichen Ausführungsform weisen die Tamper-Sensoren auch Temperatursensoren zur Erfassung einer Temperaturänderung auf.

Bei einer weiteren möglichen Ausführungsform weisen die Tamper-Sensoren auch Näherungssensoren auf.

Bei einer weiteren möglichen Ausführungsform weisen die Tamper-Sensoren auch Erschütterungssensoren, die eine Lageveränderung erkennen, auf.

Bei einer weiteren möglichen Ausführungsform weisen die Tamper-Sensoren auch Drahtgeflechte, die in einer vergossenen Ummantelung bzw. einem vergossenen Gehäuse vorgesehen sind, auf.

Andere Arten von Tamper-Sensoren, die einen bei einer physikalischen Manipulation auftretenden physikalischen Effekt aufweisen kann, sind möglich.

Vorzugsweise werden bei der erfindungsgemäßen Sicherheitsvorrichtung passive Tamper-Sensoren eingesetzt, die keine eigene Stromversorgung benötigen.

Bei einer möglichen Ausführungsform der erfindungsgemäßen Sicherheitsvorrichtung beziehen diese passiven Tamper-Sensoren jeweils ihre Energie zur Erzeugung der Manipulationsmeldung an die Sicherheitsvorrichtung aus einer bei der physikalischen Manipulation entstehenden Energie. Befindet sich beispielsweise ein Tamper-Sensor auf einer Glasscheibe, die mit einem Hammer eingeschlagen wird, kann bei einer möglichen Ausführungsform ein Tamper-Sensor die für die Erzeugung der Manipulationsmeldung erforderliche Energie aus der bei dem Hammereinschlag auftretenden mechanischen Energie gewinnen.

Bei einer alternativen Ausführungsform beziehen die passiven Tamper-Sensoren jeweils ihre Energie zur Erzeugung der Manipulationsmeldung an die Sicherheitsvorrichtung aus einem von der Sicherheitsvorrichtung ausgestrahlten Feld, insbesondere einem elektromagnetischen Feld.

Bei einer möglichen Ausführung der erfindungsgemäßen Sicherheitsvorrichtung sind die dem Feldgerät zugehörigen Tamper-Sensoren in einem digitalen Gerätezertifikat des Feldgerätes eincodiert.

Die Erfindung schafft ferner ein Verfahren zum Bereitstellen eines kryptographischen Schlüssels für ein Feldgerät, wobei dem Feldgerät der kryptographische Schlüssel durch eine Sicherheitsvorrichtung nur dann bereitgestellt wird, sofern die Sicherheitsvorrichtung innerhalb eines vorgegebenen Zeitraums von keinem dem Feldgerät zugeordneten Tamper-Sensor eine Manipulationsmeldung empfängt, die eine in dem Feldgerät vorgenommene physikalische Manipulation meldet.

Bei einer möglichen Ausführungsform des erfindungsgemäßen Verfahrens wird der kryptographische Schlüssel dem Feldgerät nur nach erfolgter Authentisierung des Feldgerätes gegenüber der Sicherheitsvorrichtung bereitgestellt.

Bei einer weiteren möglichen Ausführungsform des erfindungsgemäßen Verfahrens beziehen die Tamper-Sensoren die Energie zur Erzeugung einer Manipulationsmeldung aus einer bei der Manipulation entstehenden Energie oder aus einem von der Sicherheitsvorrichtung ausgestrahlten Feld.

Bei einer möglichen Ausführungsform des erfindungsgemäßen Verfahrens handelt es sich bei dem bereitgestellten kryptographischen Schlüssel um einen Sitzungsschlüssel, der durch das Feldgerät zur Kommunikation mit einem anderen Feldgerät oder einem Gateway eines Netzwerkes verwendet wird.

Bei einer weiteren möglichen Ausführungsform des erfindungsgemäßen Verfahrens entschlüsselt das Feldgerät mit Hilfe des bereitgestellten kryptographischen Schlüssels Daten, die in dem Feldgerät verschlüsselt abgespeichert sind.

Im Weiteren werden mögliche Ausführungsformen der erfindungsgemäßen Sicherheitsvorrichtung und des erfindungsgemäßen Verfahrens zur Bereitstellung eines kryptographischen Schlüssels für ein Feldgerät unter Bezugnahme auf die beigefügten Figuren näher beschrieben.

Es zeigen:
- Fig. 1: ein Ausführungsbeispiel eines Systems, das über eine Sicherheitsvorrichtung zur Bereitstellung von kryptographischen Schlüsseln für Feldgeräte gemäß der Erfindung verfügt;
- Fig. 2: ein Signaldiagramm zur Darstellung der Funktionsweise des erfindungsgemäßen Verfahrens zum Bereitstellen von kryptographischen Schlüsseln für ein Feldgerät;
- Fig. 3: ein Ausführungsbeispiel für ein weiteres System, welches über eine Sicherheitsvorrichtung zur Bereitstellung eines kryptographischen Schlüssels für ein Feldgerät gemäß der Erfindung verfügt.

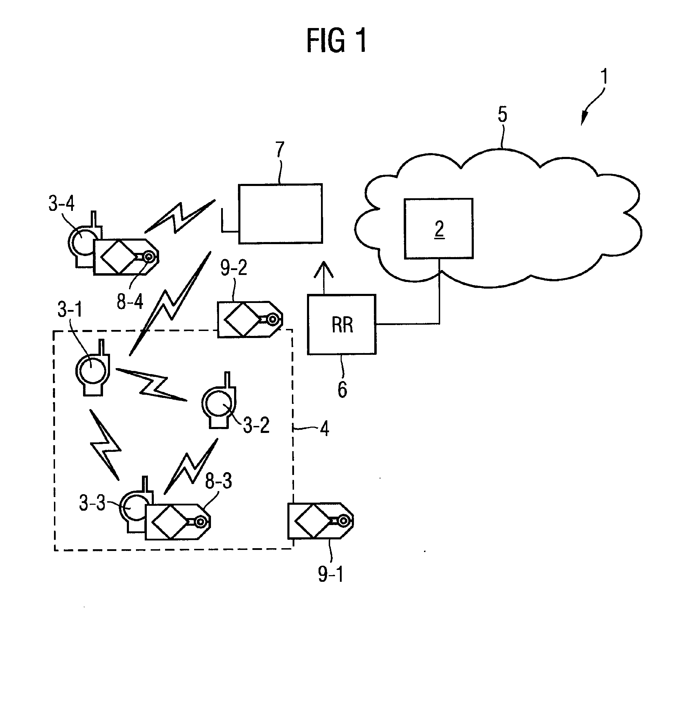

Wie man aus Fig. 1 erkennen kann, verfügt das in Fig. 1 dargestellte System 1 über eine Sicherheitsvorrichtung 2 zur Bereitstellung von kryptographischen Schlüsseln oder Credentials für verschiedene Feldgeräte 3-i. Bei dem dargestellten Beispiel befinden sich drei Feldgeräte 3-1, 3-2, 3-3 in einem Schaltschrank 4, der als gestrichelte Linie angedeutet ist. Die Sicherheitsvorrichtung 2 ist über ein Netzwerk 5 mit einer Leseeinrichtung 6 verbunden. Bei der Leseeinrichtung 6 kann es sich beispielsweise um einen RFID-Reader (RR) handeln, der über das Netzwerk 5 mit der Sicherheitsvorrichtung 2 verbunden ist. Weiterhin ist die Sicherheitsvorrichtung 2 bei dem in Fig. 1 dargestellten Ausführungsbeispiel über das Netzwerk 5 mit einem Gateway 7 verbunden, das mit den verschiedenen Feldgeräten 3-i kommunizieren kann. Bei dem in Fig. 1 dargestellten Ausführungsbeispiels befindet sich ein Feldgerät 3-4 außerhalb des Schaltschrankes 4. Bei den Feldgeräten kann es sich beispielsweise um Sensorknoten eines Sensornetzwerkes handeln. In dem dargestellten Ausführungsbeispiel verfügen einige Sensorknoten bzw. Feldgeräte über eigene Tamper-Sensoren 8-i. So verfügt beispielsweise das Feldgerät 3-3 innerhalb des Schaltschrankes 4 über einen eigenen Tamper-Sensor 8-3. Weiterhin verfügt das Feldgerät 3-4 außerhalb des Schaltschrankes 4 über einen zugehörigen eigenen Tamper-Sensor 8-4. An dem Schaltschrank 4 sind in dem dargestellten Ausführungsbeispiel weitere Tamper-Sensoren 9-1, 9-2 angebracht. Diese Tamper-Sensoren 9-1, 9-2 sind somit nicht direkt an Feldgeräten 3-i angebracht, sondern an einem Gehäuse bzw. einem Schaltschrank 4, in dem sich die Feldgeräte befinden. In dem in Fig. 1 dargestellten Ausführungsbeispiel sind an dem Schaltschrank 4 zwei derartige Tamper-Sensoren 9-1, 9-2 angebracht. Die Tamper-Sensoren 8-i, 9-i können bei dem in Fig. 1 dargestellten Ausführungsbeispiel durch die Leseeinrichtung 6 abgefragt werden. Bei den Tamper-Sensoren 8-i, 9-i kann es sich beispielsweise um passive Tamper-Sensoren handeln, die ihre Energie zur Erzeugung einer Manipulationsmeldung beispielsweise aus einem von der Leseeinrichtung 6 ausgestrahlten elektromagnetischen Feld beziehen. Die Tamper-Sensoren 8-3, 8-4 sind direkt an dem zu überwachenden Feldgerät bzw. Sensorknoten 3-3, 3-4 angebracht, wobei sie an dem Gehäuse des Feldgerätes angebracht sein können oder in dem Feldgerät selbst integriert sein können. Die Tamper-Sensoren 9-1, 9-2 sind beispielsweise an Glasscheiben eines Schaltschrankes 4 angebracht und erfassen eine physikalische Manipulation an der jeweiligen Glasscheibe des Schaltschrankes 4. Bei dem in Fig. 1 dargestellten Ausführungsbeispiel kommunizieren die Tamper-Sensoren 8-i, 9-i mit der Leseeinrichtung 6 drahtlos. Alternativ können die Tamper-Sensoren auch drahtgebunden eine Manipulationsmeldung an die Sicherheitsvorrichtung 2 übertragen. Die Sicherheitsvorrichtung 2 ist mit mindestens einem dem jeweiligen Feldgerät zugeordneten 3-i Tamper-Sensor verbunden. Dabei kann einem Feldgerät ein oder mehrere Tamper-Sensoren zugeordnet werden. Beispielsweise sind dem Sensorknoten 3-3 in dem dargestellten Ausführungsbeispiel neben dem direkt angebrachten Tamper-Sensor 8-3 auch die beiden Tamper-Sensoren 9-1, 9-2 zugeordnet, da sich das Feldgerät 3-3 innerhalb des Schaltschrankes 4 befindet, welcher seinerseits durch die beiden Tamper-Sensoren 9-1, 9-2 überwacht wird. Dem Feldgerät 3-1 bzw. dem Sensorknoten, welcher über keine eigenen Tamper-Sensoren verfügt, sind im Wesentlichen die Tamper-Sensoren 9-1, 9-2 des Schaltschrankes 4 zugeordnet. Der außerhalb des Schaltschrankes 4 vorgesehene Sensorknoten 3-4 verfügt über einen eigenen Tamper-Sensor 8-4, der ihm ebenfalls zugeordnet ist.

Bei einer möglichen Ausführungsform verfügt die Sicherheitsvorrichtung 2 über einen Datenspeicher und verwaltet eine Liste der den jeweiligen Feldgeräten 3-i zugeordneten Tamper-Sensoren. Ein einem Feldgerät 3-i zugeordnete Tamper-Sensor sendet bei Erkennung einer an dem Feldgerät 3-i vorgenommenen physikalischen Manipulation eine Manipulationsmeldung ab, beispielsweise eine Tamper-Ereignis- bzw. Tamper-Eventmeldung TE, die beispielsweise über die Leseeinrichtung 6 an die Sicherheitsvorrichtung 2 weitergeleitet wird. Meldet sich ein Feldgerät 3-i bei der Sicherheitsvorrichtung 2, beispielsweise über das Gateway 7, an, werden dem jeweiligen Feldgerät 3-i notwendige kryptographische Schlüssel bzw. Credentials durch die Sicherheitsvorrichtung 2 nur dann bereitgestellt, falls die Sicherheitsvorrichtung 2 von keinem der dem Feldgerät 3-i zugeordneten Tamper-Sensoren bis dahin eine Manipulationsmeldung bzw. eine Tamper-Eventmeldung TE erhalten hat. In einer Variante wird der einem Feldgerät 3-i bereits bereitgestellter kryptographische Schlüssel bzw. Credential widerrufen, falls die Sicherheitsvorrichtung 2 von einem der dem Feldgerät 3-i zugeordneten Tamper-Sensor eine Manipulationsmeldung bzw. eine Tamper-Eventmeldung TE erhält. Dazu kann die Sicherheitsvorrichtung 2 eine dem bereitgestellten Schlüssel bzw. dem bereitgestellten Credential zugeordnete Widerrufsnachricht bereitstellen. Bei einer möglichen Ausführungsform werden die kryptographischen Schlüssel dem jeweiligen Feldgerät 3-i nur für eine bestimmte Zeitdauer zur Verfügung gestellt und verfallen nach Ablauf einer bestimmten Zeit. Bei einer möglichen Ausführungsform werden die kryptographischen Schlüssel den Feldgeräten 3-i bei der Anmeldung zu einem Netzwerk durch die Sicherheitsvorrichtung 2 nur nach einer erfolgreichen Authentisierung des jeweiligen Feldgerätes 3-i gegenüber der Sicherheitsvorrichtung 2 bereitgestellt. Bei dem bereitgestellten kryptographischen Schlüssel kann es sich beispielsweise um einen Sitzungsschlüssel bzw. Session Key SK handeln. Dieser bereitgestellte kryptographische Schlüssel kann durch das Feldgerät 3-i zur Ver- oder Entschlüsselung von Nachrichten verwendet werden, die zwischen den Feldgeräten ausgetauscht werden. Weiterhin ist es möglich, dass der bereitgestellte kryptographische Schlüssel auch zur Entschlüsselung von Daten herangezogen wird, die in dem Feldgerät 3-i verschlüsselt abgelegt sind. Die in Fig. 1 dargestellten Tamper-Sensoren können unterschiedlichste Tamper-Sensoren sein, die verschiedene physikalische Manipulationen erfassen, insbesondere elektrische oder magnetische Schalter, Sensoren zur Erfassung elektromagnetischer Strahlung, Sensoren zur Erfassung von Ionenstrahlen, Temperatursensoren, Näherungssensoren, Bewegungssensoren, Erschütterungssensoren oder Drahtgeflechtsensoren. Vorzugsweise werden als Tamper-Sensoren 8-i, 9-i passive Tamper-Sensoren eingesetzt, die über keine eigene Stromversorgung verfügen müssen.

Bei einer bevorzugten Ausführungsform beziehen die passiven Tamper-Sensoren 8-i, 9-i ihre Energie zur Erzeugung einer Manipulationsmeldung an die Sicherheitsvorrichtung 2 aus einer bei der physikalischen Manipulation entstehenden Energie. Wird beispielsweise die Glasscheibe des Schaltschrankes 4, an dem sich der Tamper-Sensor 9-i befindet, eingeschlagen, kann bei einer möglichen Ausführungsform dieser Tamper-Sensor aus der mechanischen Erschütterung eine Energie gewinnen, die es ihm erlaubt, eine Manipulationsmeldung bzw. Tamper-Ereignismeldung TE an die Leseeinrichtung 6 auszustrahlen.

Bei einer alternativen Ausführungsform beziehen die passiven Tamper-Sensoren ihre Energie zur Erzeugung der Manipulationsmeldung an die Sicherheitsvorrichtung 2 aus einem ausgestrahlten elektromagnetischen Feld, welches beispielsweise durch die Leseeinrichtung 6 ausgestrahlt wird.

Die Sicherheitsvorrichtung 2 dient zum Bereitstellen, d.h. zum Ausliefern oder Vereinbaren eines kryptographischen Schlüssels oder Credentials an ein Feldgerät 3-i mit einer Kommunikationsschnittstelle, beispielsweise Ethernet, IP, W-LAN oder ähnliches. Dabei authentisiert sich das Feldgerät 3-i vorzugsweise gegenüber der Sicherheitsvorrichtung 2. Das Feldgerät 3-i benötigt einen kryptographischen Schlüssel bei seinem Betrieb. Dabei erfolgt das Bereitstellen des kryptographischen Schlüssels seitens der Sicherheitsvorrichtung 2 vorzugsweise bei einer Netzwerkanmeldung des jeweiligen Feldgerätes, beispielsweise über ein Ethernet oder über eine Funkschnittstelle, insbesondere W-LAN, RFID, IEEE802.15.4.

Die Sicherheitsvorrichtung 2 überwacht zusätzlich externe Tamper- bzw. Manipulationssensoren, wobei diese Tamper-Sensoren jeweils einem oder mehreren Feldgeräten zugeordnet sind. Ein kryptographischer Schlüssel bzw. Credential wird einem Feldgerät 3-i seitens der Sicherheitsvorrichtung 2 nur dann zur Verfügung gestellt, wenn kein für das entsprechende Feldgerät 3-i relevanter Manipulations- bzw. Tamper-Sensor ein Tamper-Ereignis TE erkennt bzw. in einem zurückliegenden Überwachungszeitraum erkannt hat.

Die Manipulations- bzw. Tamper-Sensoren können drahtlos mit der Sicherheitsvorrichtung 2 verbunden sein. Dabei ist es möglich, dass die Tamper-Sensoren drahtlos kommunizieren, beispielsweise über RFID oder IEEE802.15.4. Bei den Tamper-Sensoren kann es sich insbesondere um passive Tamper-Sensoren handeln, d.h. Sensoren ohne eigene Stromversorgung oder Batteriepufferung. Die passiven Tamper-Sensoren können die benötigte Energie für den Betrieb aus einem von der Sicherheitsvorrichtung 2 ausgestrahlten Feld beziehen. Dabei kann es sich um ein Feld eines RFID-Readers handeln oder auch um ein Feld, das über eine Antenne ausgestrahlt wird, ohne dass eine Leseeinrichtung angeschlossen ist. Weiterhin ist es möglich, dass die Tamper-Sensoren ihren Energiebedarf aus dem zu überwachenden Ereignis selbst beziehen, d.h. beispielsweise kann ein Einbruchsensor bzw. Tamper-Sensor als elektrischer Sensor ausgestattet sein, bei dem durch Druck elektrische Energie erzeugt wird. Diese erzeugte Energie kann zur Kommunikation des Tamper-Sensors genutzt werden. Ein solcher Tamper-Sensor kann separat vorliegen, beispielsweise zur Montage an einer Wartungsklappe. Weiterhin ist es möglich, dass ein derartiger Tamper-Sensor in einem Feldgerät 3-i integriert ist.

Bei einer möglichen Ausführungsform kann bei einer Kommunikation eines Feldgerätes mit der Sicherheitsvorrichtung 2 von dem Feldgerät an die Sicherheitsvorrichtung 2 eine Information übertragen werden, welche Tamper- bzw. Manipulationssensoren für dieses Feldgerät 3-i seitens der Sicherheitsvorrichtung 2 zu überwachen sind. Speziell für in das Feldgerät integrierte Tamper-Sensoren kann diese Information in ein digitales Gerätezertifikat des Feldgerätes 3-i eincodiert sein. Alternativ kann die Sicherheitsvorrichtung 2 diese Daten auch aus einer zentralen Datenbank abfragen, die beispielsweise anhand einer Geräteidentifikation, zum Beispiel über ein digitales Zertifikat, zur Verfügung gestellt wird.

Bei einer möglichen Ausführungsform löscht das Feldgerät 3-i die in dem Feldgerät gespeicherten geheimen Daten bzw. sensiblen Daten, sobald das Feldgerät 3-i in einen inaktiven Betriebszustand wechselt, insbesondere nach Erkennung einer physikalischen Manipulation an dem jeweiligen Feldgerät.

Aus Sicht des Feldgerätes 3-i, das zwischenzeitlich in einem inaktiven Betriebszustand, beispielsweise ohne Stromversorgung, war, kann daher später dieses Feldgerät bei der Sicherheitsvorrichtung 2 abfragen, ob die zugehörigen Manipulations- bzw. Tamper-Sensoren durchgängig, d.h. während des gesamten Überwachungszeitraumes, keine Manipulation erkannt haben. Sofern keine Manipulation vorliegt, erhält das Feldgerät 3-i dann von der Sicherheitsvorrichtung 2 geheime Parameter bzw. kryptographische Schlüssel, die es benötigt, um einen regulären Betrieb aufzunehmen.

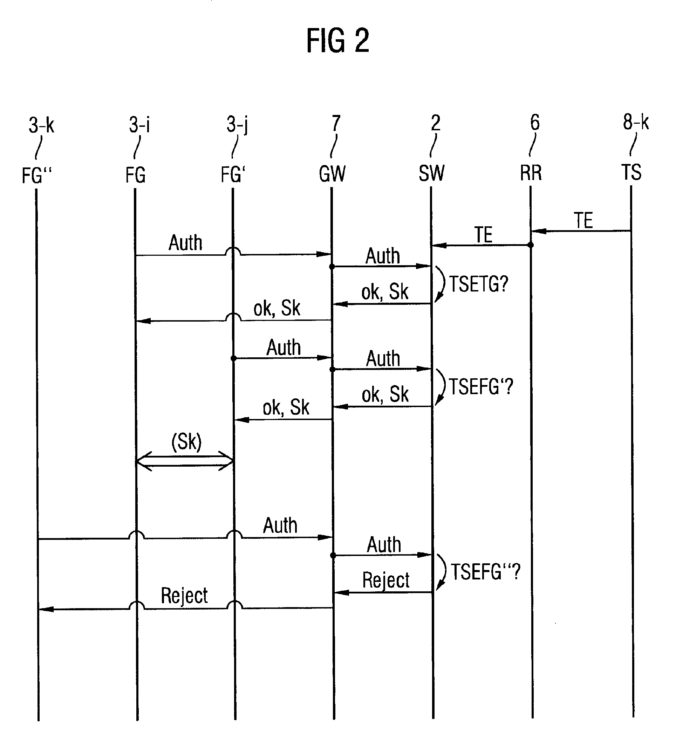

Fig. 2 zeigt ein Signaldiagramm zur Erläuterung des erfindungsgemäßen Verfahrens zum Bereitstellen eines kryptographischen Schlüssels für ein Feldgerät 3-i. Bei dem dargestellten Ausführungsbeispiel überwacht die Sicherheitsvorrichtung 2 eine Vielzahl unterschiedlicher Tamper-Sensoren 8-i, die verschiedenen Feldgeräten 3-i, 3-j zugeordnet sind. In dem in Fig. 2 dargestellten Beispiel erhält die Sicherheitsvorrichtung 2 zunächst von einem Tamper-Sensor 8-k, welcher einem Feldgerät 3-k zugeordnet ist, eine Manipulationsmeldung bzw. Tamper-Ereignismeldung TE.

Anschließend überträgt ein anderes Feldgerät 3-i eine Authentisierungsnachricht, die beispielsweise mit einem Geräteschlüssel des Gerätes verschlüsselt ist, über das Gateway 7 zu der Sicherheitsvorrichtung 2, um sich zu registrieren bzw. anzumelden. Die Sicherheitsvorrichtung 2 überprüft die erhaltene Anmeldenachricht dahingehend, ob der anmeldende Knoten- bzw. das Feldgerät 3-i berechtigt ist, das Netzwerk zu nutzen. Weiterhin überprüft die Sicherheitsvorrichtung, ob an einem dem Feldgerät 3-i zugeordneten Tamper-Sensor eine Manipulationsmeldung vorliegt. Falls keine Manipulationsmeldung vorliegt und die Authentisierung des Feldgerätes 3-i erfolgreich ist, erhält das anfragende Feldgerät 3-i eine Accept bzw. OK-Nachricht und einen zugehörigen Sitzungsschlüssel bzw. Session Key SK zum Schutz seiner Kommunikation im Netzwerk. In gleicher Weise meldet sich bei dem in Fig. 2 dargestellten Beispiel ein anderes Feldgerät 3-j bei der Sicherheitsvorrichtung 2 an und erhält ebenfalls einen Sitzungsschlüssel bzw. Session Key SK. Bei einer möglichen Ausführungsform ist der Sitzungsschlüssel SK netzwerkweit gültig. Anschließend können die beiden Feldgeräte 3-i, 3-j mit Hilfe des empfangenen Sitzungsschlüssels SK eine kryptographische geschützte Kommunikation untereinander durchführen, wie in Fig. 2 dargestellt.

Meldet sich bei dem in Fig. 2 dargestellten Beispiel ein weiterer Knoten bzw. ein weiteres Feldgerät 3-k bei der Sicherheitsvorrichtung 2 an, erkennt die Sicherheitsvorrichtung 2, dass für diesen Knoten eine Manipulationsmeldung bzw. Tamper-Ereignismeldung TE bereits vorliegt und weist den Knoten bzw. das Feldgerät 3-k zurück. Bei einer möglichen Ausführungsform löst die Zurückweisungsnachricht (Reject) bei dem anfragenden Knoten 3-k automatisch ein Löschen sensibler Daten aus.

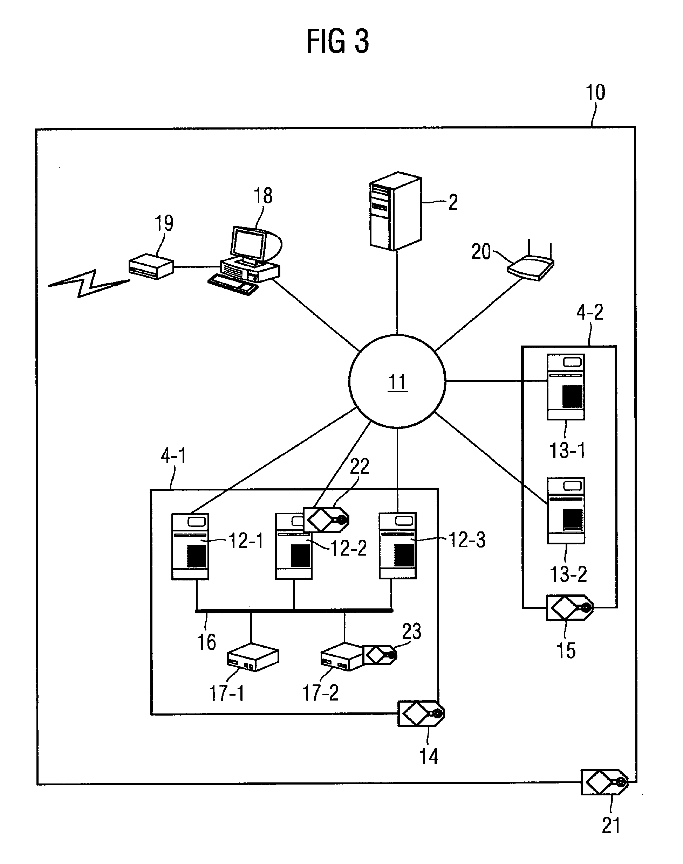

Fig. 3 zeigt ein weiteres Anwendungsbeispiel für eine Sicherheitsvorrichtung 2 gemäß der Erfindung. Bei dem in Fig. 3 dargestellten Beispiel befindet sich die Sicherheitsvorrichtung 2 in einer Substation 10, beispielsweise einem Transformatorhaus eines Energieverteilnetzes. Die Substation 10 verfügt über ein Netzwerk 11, an dem in dem dargestellten Beispiel verschiedene Feldgeräte 12-1, 12-2, 12-3 in einem ersten Schaltschrank 4-1 und weitere Feldgeräte 13-1, 13-2 in einem zweiten Schaltschrank 4-2 angeschlossen sind. Der erste Schaltschrank 4-1 verfügt über einen Tamper-Sensor 14 und der zweite Schaltschrank 4-2 verfügt über einen Tamper-Sensor 15. In dem dargestellten Beispiel sind die Feldgeräte 12-1, 12-2, 12-3 in dem ersten Schaltschrank 4-1 über einen Bus, beispielsweise einen Ethernet-Bus 16, miteinander verbunden und sind mit weiteren Feldgeräten bzw. Steuergeräten 17-1, 17-2 über den Bus 16 angeschlossen. Weiterhin ist das Netzwerk 11 über einen Stations-PC 18 und ein Modem 19 an einen entfernten Server, beispielsweise zu Fernwartungszwecken, angeschlossen. Weiterhin ist an dem Netzwerk 11 in dem dargestellten Beispiel eine DCF77-Einheit 20 angeschlossen. Die Ortsnetzstation 10 kann zu ihrem eigenen Schutz einen weiteren Tamper-Sensor 21 aufweisen, der beispielsweise an einer Tür der Ortsnetzstation angebracht ist. Bei den Feldgeräten, die in einem Schaltschrank vorgesehen sind, können zusätzlich eigene Tamper-Sensoren angebracht sein. Beispielweise weist das Feldgerät 12-2 in dem Schaltschrank 4-1 einen Tamper-Sensor 22 und das Gerät 17-2 weist einen Tamper-Sensor 23 auf.

Einem Feldgerät sind vorzugsweise diejenigen Tamper-Sensoren zugeordnet, die bei einem direkten physikalischen Zugriff auf das Feldgerät relevant sind. Bei dem in Fig. 3 dargestellten Beispiel sind beispielsweise für eine physikalische Manipulation an dem Feldgerät 12-2 die Tamper-Sensoren 22, 14, 21 relevant, da ein Angreifer zunächst die Tür der Ortsnetzstation 21 öffnen muss und dann den Schaltschrank 4-1 aufbrechen muss, um anschließend an dem Feldgerät 12-2 direkt eine physikalische Manipulation vornehmen zu können.

Bei einer möglichen Variante des erfindungsgemäßen Verfahrens werden in Abhängigkeit von dem jeweiligen Tamper-Ereignis TE verschiedene Maßnahmen getroffen. Beispielsweise werden bei besonders hohen Sicherheitsanforderungen bereits bei Eindringen in die Ortsnetzstation 10 mit einer entsprechenden Manipulationsmeldung durch den Tamper-Sensor 21 alle innerhalb der Ortsnetzstation 10 befindlichen Feldgeräte als gefährdet eingestuft und erhalten durch die Sicherheitsvorrichtung 2 keine kryptographischen Schlüssel bzw. kryptographischen Credentials. Alternativ werden Feldgeräte durch die Sicherheitsvorrichtung 2 erst dann als gefährdet eingestuft, wenn sie direkt betroffen sind. Beispielsweise werden die Feldgeräte 12-1, 12-2, 12-3 sowie die Geräte 17-1, 17-2 erst dann als gefährdet eingestuft und erhalten keine kryptographischen Schlüssel seitens der Sicherheitsvorrichtung 2 mehr, wenn der Tamper-Sensor 14 ein Eindringen in den entsprechenden Schaltschrank 4-1 meldet. Bei einer weiteren Variante wird ein Feldgerät erst dann als gefährdet eingestuft, wenn direkt unmittelbar an dem Feldgerät eine physikalische Manipulation erkannt wird. In dem in Fig. 3 dargestellten Ausführungsbeispiel wird beispielsweise das Feldgerät 12-2 erst dann als gefährdet eingestuft, wenn auch zusätzlich noch der Tamper-Sensor 22 ein Tamper-Ereignis TE an die Sicherheitsvorrichtung 2 meldet. In dieser Ausführungsvariante folgt eine Sperrung der Bereitstellung von kryptographischen Schlüsseln für das Feldgerät 12-2 erst nachdem die Sicherheitsvorrichtung 2 sowohl von dem Tamper-Sensor 21 als auch von dem Tamper-Sensor 14 und zusätzlich von dem Tamper-Sensor 22 eine entsprechende Manipulationsmeldung erkannt hat.

Bei einer weiteren möglichen Ausführungsform folgen in Abhängigkeit von den verschiedenen Manipulationsmeldungen der dem Feldgerät zugeordneten Tamper-Sensoren verschiedene Maßnahmen. Beispielsweise wird die Sicherheitsvorrichtung 2 bei einer Manipulationsmeldung durch den Tamper-Sensor 21 zunächst nur in einen Alarmbetriebsmodus gesetzt, ohne dass weitere Maßnahmen durchgeführt werden. Wird beispielsweise anschließend der Schaltschrank 4-1 manipuliert und erhält die Sicherheitsvorrichtung 2 von dem Tamper-Sensor 14 eine entsprechende Manipulationsmeldung, werden alle darin enthaltenen Feldgeräte als gefährdet eingestuft und erhalten kein kryptographisches Material bzw. die bereits übergebenen kryptographischen Schlüssel werden gesperrt.

In einer dritten Stufe, erst wenn 2B ein entsprechender direkt an dem Feldgerät 12-2 angebrachter Tamper-Sensor 22 eine Manipulationsmeldung an dem jeweiligen Feldgerät meldet, werden dann zusätzlich automatisch die in dem Feldgerät gespeicherten sensiblen Daten, insbesondere kryptographischen Schlüssel, seitens der Sicherheitsvorrichtung 2 gelöscht. Bei dieser Ausführungsvariante erfolgt somit eine mehrstufige Reaktion in Abhängigkeit von der Eindringtiefe des Angreifers. Das erfindungsgemäße Verfahren bzw. die erfindungsgemäße Sicherheitsvorrichtung 2 zur Bereitstellung eines kryptographischen Schlüssels für ein Feldgerät lässt sich vielseitig einsetzen. Beispielsweise kann die Sicherheitsvorrichtung 2 zur Überwachung einer industriellen Anlage, beispielsweise einer Pipeline, oder einer Energieverteilstation, beispielsweise einer Ortsnetzstation, eingesetzt werden. Weiterhin eignet sich die erfindungsgemäße Sicherheitsvorrichtung 2 beispielsweise zum Einsatz in der Verkehrstechnik, beispielsweise bei Ampelschaltschränken und dergleichen. Weitere Beispiele sind Stellwerke, Weichen und Fahrsignale im Eisenbahnbereich. Weiterhin eignet sich die erfindungsgemäße Sicherheitsvorrichtung 2 insbesondere zur Gebäudeüberwachung und für sonstige schutzkritische Infrastrukturen.

Bei einer möglichen Ausführungsvariante sind die verschiedenen Feldgeräten zugeordneten Tamper-Sensoren dem jeweiligen Feldgerät bekannt bzw. eincodiert und werden in einem bestimmten Betriebsmodus zunächst der Sicherheitsvorrichtung 2 gemeldet. Bei einer möglichen Ausführungsform verwaltet die Sicherheitsvorrichtung 2 eine entsprechende Liste von den jeweiligen Feldgeräten zugeordneten Tamper-Sensoren. Bei einer möglichen Ausführungsform wird diese Liste bei Wartungs- bzw. Reparaturmaßnahmen bei der jeweiligen Anlage automatisch aktualisiert. Die erfindungsgemäße Sicherheitsvorrichtung 2 kann außer in industriellen Anlagen auch in anderen Bereichen eingesetzt werden, beispielsweise im Fahrzeugbereich zur Überwachung von Manipulationen an Fahrzeugkomponenten. Die Kommunikation der Sicherheitsvorrichtung 2 mit den Tamper-Sensoren kann, wie in Fig. 3 dargestellt, drahtgebunden über ein Netzwerk 11 erfolgen oder, wie in Fig. 1 dargestellt, zumindest teilweise drahtlos.

## Patentansprüche

1. Sicherheitsvorrichtung (2) zur Bereitstellung eines kryptographischen Schlüssels für ein Feldgerät (3), **dadurch gekennzeichnet, dass** die Sicherheitsvorrichtung (2) mit mindestens einem dem Feldgerät (3) zugeordneten Tamper-Sensor (8,9) verbunden ist, welcher bei Erkennung einer an dem Feldgerät (3) vorgenommenen physikalischen Manipulation eine Manipulationsmeldung abgibt,
wobei der kryptographische Schlüssel dem Feldgerät (3) durch die Sicherheitsvorrichtung (2) nur bereitgestellt wird, falls die Sicherheitsvorrichtung (2) von den dem Feldgerät (3) zugeordneten Tamper-Sensoren (8,9) keine Manipulationsmeldung erhält.

2. Sicherheitsvorrichtung nach Anspruch 1,
wobei die Tamper-Sensoren (8,9) drahtlos oder drahtgebunden mit der Sicherheitsvorrichtung (2) verbunden sind.

3. Sicherheitsvorrichtung nach Anspruch 1 oder 2,
wobei die Tamper-Sensoren (8,9) an dem Feldgerät (3) direkt angeschlossen sind oder an einem geschlossenen Gehäuse bzw. Schaltschrank (4) angebracht sind, in welchem sich das Feldgerät (3) befindet.

4. Sicherheitsvorrichtung nach Anspruch 1 - 3,
wobei der kryptographische Schlüssel dem Feldgerät (3) bei dessen Anmeldung zu einem Netzwerk nur nach erfolgreicher Authentisierung des Feldgerätes (3) gegenüber der Sicherheitsvorrichtung (2) durch die Sicherheitsvorrichtung (2) bereitgestellt wird.

5. Sicherheitsvorrichtung nach Anspruch 1 - 4,
wobei der durch die Sicherheitsvorrichtung (2) bereitgestellte kryptographische Schlüssel durch das Feldgerät (3) zur Ver- oder Entschlüsselung von Nachrichten verwendet wird, die das Feldgerät (3) mit anderen Feldgeräten oder mit einem Gateway-Knoten (7) eines Netzwerkes austauscht.

6. Sicherheitsvorrichtung nach einem der vorhergehenden Ansprüche 1 - 5,
wobei die Sicherheitsvorrichtung (2) eine Leseeinheit (6) aufweist, die Meldungen von den Tamper-Sensoren drahtlos empfängt.

7. Sicherheitsvorrichtung nach Anspruch 1 - 6,
wobei die mit der Sicherheitsvorrichtung (2) verbundenen Tamper-Sensoren (8,9) aktive oder passive Sensoren zur Erfassung physikalischer Manipulationen an dem Feldgerät (3) sind,
wobei die Tamper-Sensoren (8,9) insbesondere
- elektrische oder magnetische Schalter,
- Sensoren zur Erfassung elektromagnetischer Strahlung,
- Sensoren zur Erfassung von Ionenstrahlen,
- Temperatursensoren zur Erfassung von Temperaturänderungen,
- Näherungssensoren zur Erfassung der Annäherung eines Objektes,
- Bewegungssensoren oder
- Drahtnetzsensoren aufweisen.

8. Sicherheitsvorrichtung nach Anspruch 1 - 7,
wobei die passiven Tamper-Sensoren jeweils ihre Energie zur Erzeugung der Manipulationsmeldung an die Sicherheitsvorrichtung (2) aus einer bei der physikalischen Manipulation entstehenden Energie beziehen.

9. Sicherheitsvorrichtung nach Anspruch 1 - 7,
wobei die passiven Tamper-Sensoren jeweils ihre Energie zur Erzeugung der Manipulationsmeldung an die Sicherheitsvorrichtung (2) aus einem von der Sicherheitsvorrichtung (2) ausgestrahlten Feld beziehen.

10. Sicherheitsvorrichtung nach einem der vorangehenden Ansprüche 1 - 9,
wobei die dem jeweiligen Feldgerät (3) zugeordneten Tamper-Sensoren durch das Feldgerät (3) der Sicherheitsvorrichtung (2) gemeldet werden oder durch die Sicherheitsvorrichtung (2) von einer Datenbank anhand einer Geräte-ID des jeweiligen Feldgerätes (3) abgefragt werden.

11. Sicherheitsvorrichtung nach Anspruch 10,
wobei die dem Feldgerät (3) zugeordneten Tamper-Sensoren in einem digitalen Gerätezertifikat des jeweiligen Feldgerätes (3) eincodiert sind.

12. Verfahren zum Bereitstellen eines kryptographischen Schlüssels für ein Feldgerät (3),
wobei dem Feldgerät (3) der kryptographische Schlüssel durch eine Sicherheitsvorrichtung (2) nur dann bereitgestellt wird, sofern die Sicherheitsvorrichtung (2) innerhalb eines vorgegebenen Zeitraums von keinem dem Feldgerät (3) zugeordneten Tamper-Sensor (8,9) eine Manipulationsmeldung erhält, die eine an dem Feldgerät (3) vorgenommene physikalische Manipulation meldet.

13. Verfahren nach Anspruch 12,
wobei der kryptographische Schlüssel dem Feldgerät (3) durch die Sicherheitsvorrichtung (2) nur nach erfolgter erfolgreiche Authentisierung des Feldgerätes (3) gegenüber der Sicherheitsvorrichtung (3) bereitgestellt wird.

14. Verfahren nach Anspruch 12 oder 13,
wobei die Tamper-Sensoren (8,9) die Energie zur Erzeugung einer Manipulationsmeldung aus einem bei der Manipulation entstehenden Energie oder aus einem von der Sicherheitsvorrichtung (2) ausgestrahlten Feld beziehen.

15. Verfahren nach Anspruch 12 - 14,
wobei der durch die Sicherheitsvorrichtung (2) bereitgestellte kryptographische Schlüssel ein Sitzungsschlüssel (SK) ist, der durch das Feldgerät (3) zur Kommunikation mit anderen Feldgeräten (3) oder einem Gateway (7) eines Netzwerkes verwendet wird.

## Claims

1. Security device (2) for providing a cryptographic key for a field device (3), **characterised in that**
the security device (2) is connected to at least one tamper sensor (8, 9) that is assigned to the field device (3) and will emit a manipulation message upon detecting a physical manipulation carried out on the field device (3),
wherein the cryptographic key is made available to the field device (3) by the security device (2) only if the security device (2) does not receive a manipulation message from the tamper sensors (8, 9) assigned to the field device (3).

2. Security device according to claim 1,
wherein the tamper sensors (8, 9) are connected to the security device (2) wirelessly or on a hardwired basis.

3. Security device according to claim 1 or 2,
wherein the tamper sensors (8, 9) are connected directly to the field device (3) or are attached to a closed housing or control cabinet (4) in which the field device (3) is located.

4. Security device according to claim 1 - 3,
wherein the cryptographic key is made available by the security device (2) to the field device (3) when it logs in to a network only after successful authentication of the field device (3) to the security device (2).

5. Security device according to claim 1 - 4,
wherein the cryptographic key that is made available by the security device (2) is used by the field device (3) for encrypting or decrypting messages which the field device (3) exchanges with other field devices or with a gateway node (7) of a network.

6. Security device according to one of the preceding claims 1 - 5,
wherein the security device (2) has a reading unit (6) that receives messages from the tamper sensors wirelessly.

7. Security device according to claim 1 - 6,
wherein the tamper sensors (8, 9) that are connected to the security device (2) are active or passive sensors for registering physical manipulations carried out on the field device (3),
wherein the tamper sensors (8, 9) have in particular
- electric or magnetic switches,
- sensors for registering electromagnetic radiation,
- sensors for registering ion beams,
- temperature sensors for registering changes in temperature,
- proximity sensors for registering the approach of an object,
- motion sensors, or
- wire-mesh sensors.

8. Security device according to claims 1 - 7,
wherein the passive tamper sensors in each case obtain their energy for generating the manipulation message to the security device (2) from energy produced during the physical manipulation.

9. Security device according to claims 1 - 7,
wherein the passive tamper sensors in each case obtain their energy for generating the manipulation message to the security device (2) from a field emitted by the security device (2).

10. Security device according to one of the preceding claims 1 - 9,
wherein the tamper sensors assigned to the respective field device (3) are reported to the security device (2) by the field device (3) or are interrogated by the security device (2) from a database on the basis of a device ID of the respective field device (3).

11. Security device according to claim 10,
wherein the tamper sensors assigned to the field device (3) are coded into a digital device certificate of the respective field device (3).

12. Method for providing a cryptographic key for a field device (3),
wherein the cryptographic key is made available to the field device (3) by a security device (2) only if within a specified period of time the security device (2) does not receive from any tamper sensor (8, 9) assigned to the field device (3) a manipulation message reporting a physical manipulation carried out on the field device (3).

13. Method according to claim 12,
wherein the cryptographic key is made available to the field device (3) by the security device (2) only after successful authentication of the field device (3) to the security device (3).

14. Method according to claim 12 or 13,
wherein the tamper sensors (8, 9) obtain the energy for generating a manipulation message from energy produced during the manipulation or from a field radiated by the security device (2).

15. Method according to claim 12 - 14,
wherein the cryptographic key made available by the security device (2) is a session key (SK) used by the field device (3) for communicating with other field devices (3) or with a gateway (7) of a network.

## Revendications

1. Dispositif de sécurité (2) pour fournir une clé cryptographique pour un appareil de terrain (3), **caractérisé en ce que** le dispositif de sécurité (2) est relié à au moins un capteur d'intégrité (8, 9) associé à l'appareil de terrain (3), qui émet un message de manipulation lors de la détection d'une manipulation physique opérée à l'appareil de terrain (3), dans lequel la clé cryptographique n'est fournie à l'appareil de terrain (3) par le dispositif de sécurité (2) que dans le cas où le dispositif de sécurité (2) ne reçoit aucun message de manipulation en provenance des capteurs d'intégrité (8, 9) associés à l'appareil de terrain (3).

2. Dispositif de sécurité selon la revendication 1, dans lequel les capteurs d'intégrité (8, 9) sont reliés sans fil ou par fil au dispositif de sécurité (2).

3. Dispositif de sécurité selon la revendication 1 ou 2, dans lequel les capteurs d'intégrité (8, 9) sont reliés directement à l'appareil de terrain (3) ou sont placés sur un boîtier fermé ou une armoire de distribution fermée (4), dans lequel/laquelle l'appareil de terrain (3) se trouve.

4. Dispositif de sécurité selon une revendication 1 à 3, dans lequel la clé cryptographique n'est fournie par le dispositif de sécurité (2) à l'appareil de terrain (3) lors de la demande de connexion de celui-ci à un réseau qu'après authentification acceptée de l'appareil de terrain (3) par rapport au dispositif de sécurité (2).

5. Dispositif de sécurité selon une revendication 1 à 4, dans lequel la clé cryptographique fournie par le dispositif de sécurité (2) est utilisée par l'appareil de terrain (3) pour le verrouillage ou le déverrouillage d'informations, que l'appareil de terrain (3) échange avec d'autres appareils de terrain ou avec un noeud d'accès (7) d'un réseau.

6. Dispositif de sécurité selon l'une des revendications précédentes 1 à 5, dans lequel le dispositif de sécurité (2) présente une unité de lecture (6), qui reçoit sans fil des messages en provenance des capteurs d'intégrité.

7. Dispositif de sécurité selon une revendication 1 à 6, dans lequel les capteurs d'intégrité (8, 9) reliés au dispositif de sécurité (2) sont des capteurs actifs ou passifs destinés à détecter des manipulations physiques à l'appareil de terrain (3), dans lequel les capteurs d'intégrité (8, 9) comportent en particulier
- des interrupteurs électriques ou magnétiques,
- des capteurs destinés à détecter un rayonnement électromagnétique,
- des capteurs destinés à détecter des rayons ioniques,
- des capteurs de température destinés à détecter des variations de température,
- des détecteurs d'approche destinés à détecter l'approche d'un objet,
- des détecteurs de mouvement, ou
- des détecteurs en treillis.

8. Dispositif de sécurité selon une revendication 1 à 7, dans lequel les capteurs d'intégrité passifs tirent respectivement leur énergie pour l'envoi du message de manipulation au dispositif de sécurité (2) d'une énergie générée lors de la manipulation physique.

9. Dispositif de sécurité selon une revendication 1 à 7, dans lequel les capteurs d'intégrité passifs tirent respectivement leur énergie pour l'envoi du message de manipulation au dispositif de sécurité (2) d'un champ émis par le dispositif de sécurité (2).

10. Dispositif de sécurité selon une des revendications précédentes 1 à 9, dans lequel les capteurs d'intégrité associés à l'appareil de terrain respectif (3) sont signalés par l'appareil de terrain (3) au dispositif de sécurité (2) ou sont consultés par le dispositif de sécurité (2) à partir d'une base de données à l'aide d'une ID d'appareil de l'appareil de terrain respectif (3).

11. Dispositif de sécurité selon la revendication 10, dans lequel les capteurs d'intégrité associés à l'appareil de terrain (3) sont encodés dans un certificat d'appareil numérique de l'appareil de terrain respectif (3).

12. Procédé pour fournir une clé cryptographique pour un appareil de terrain (3), dans lequel on fournit la clé cryptographique à l'appareil de terrain (3) au moyen d'un dispositif de sécurité (2) uniquement dans la mesure où le dispositif de sécurité (2) ne reçoit d'aucun des capteurs d'intégrité (8, 9) associés à l'appareil de terrain (3) un message de manipulation, qui signale une manipulation physique opérée à l'appareil de terrain (3).

13. Procédé selon la revendication 12, dans lequel on fournit la clé cryptographique à l'appareil de terrain (3) au moyen du dispositif de sécurité (2) uniquement après une authentification acceptée de l'appareil de terrain (3) par rapport au dispositif de sécurité (2).

14. Procédé selon la revendication 12 ou 13, dans lequel les capteurs d'intégrité (8, 9) tirent l'énergie nécessaire pour envoyer un message de manipulation d'une énergie générée lors de la manipulation ou d'un champ émis par le dispositif de sécurité (2).

15. Procédé selon une revendication 12 à 14, dans lequel la clé cryptographique fournie par le dispositif de sécurité (2) est une clé de session (SK), qui est utilisée par l'appareil de terrain (3) pour la communication avec d'autres appareils de terrain (3) ou avec un accès (7) à un réseau.
